# EUROPEAN PATENT SPECIFICATION

(11) **EP 3 121 589 B1**
(45) Date of publication and mention of the grant of the patent: **07.03.2018**
(21) Application number: 15177885.9
(22) Date of filing: 22.07.2015
(51) Int. Cl.: G01N 21/64, G01N 21/85

(54) **OXYGEN GAS SENSOR**
SAUERSTOFFGASSENSOR
CAPTEUR DE GAZ OXYGÈNE

(43) Date of publication of application: 25.01.2017
(73) Proprietor: Institute of Solid State Physics, University of Latvia, 1063 Riga (LV); Riga Technical University, Department of Material Science and Applied Chemistry, 1048 Riga (LV)
(72) Inventor: BERZINA, Baiba, LV-1063 Riga (LV); TRINKLER, Laima, LV-1063 Riga (LV); KORSAKS, Valdis, LV-1063 Riga (LV); GRABIS, Janis, LV-1048 Riga (LV)
(74) Representative: Kuzjukevica, Lucija

(56) References cited:
- R RAMAMOORTHY ET AL: "CHEMICAL SENSORS Oxygen sensors: Materials, methods, designs and applications", JOURNAL OF MATERIALS SCIENCE, vol. 38, no. 21, 1 November 2003 (2003-11-01), pages 4271-4282, XP055240940,
- PAPKOVSKY DMITRI B: "Methods in optical oxygen sensing: protocols and critical analyses", METHODS IN ENZYMOLOGY, ACADEMIC PRESS, US, vol. 381, 1 January 2004 (2004-01-01), pages 715-735, XP008152869, ISSN: 0076-6879
- ROBERT A YOUNGMAN ET AL: "Luminescence Studies of Oxygen-Related Defects in Aluminum Nitride", JOURNAL OF THE AMERICAN CERAMIC SOCIETY, vol. 73, no. 11, 1 November 1990 (1990-11-01), pages 3238-3246, XP055240968,
- BAIBA BERZINA ET AL: "Spectral characterization of bulk and nanostructured aluminum nitride", JOURNAL OF NANOPHOTONICS, vol. 3, 3 December 2009 (2009-12-03), pages 31950-1, XP055240906, US ISSN: 1934-2608, DOI: 10.1117/1.3276803

## Description

### Field of the Invention

The present invention relates to oxygen gas sensors, especially to oxygen gas optical sensors.

### Background Art

Air is a natural habitat to the large part of living beings. It also is a mixture of gases among which oxygen (of 21%) plays the crucial role. Industrial activity such as automobile production and exploitation together with the general manufacturing, which emits air pollutants, creates local risk for air quality and that of global nature. Therefore, developing of gas sensing means and control mechanisms is current problem, especially concerning to oxygen gas.

Various types of oxygen sensors are known based on different physical processes such as material electrical resistance or conductivity, electro-galvanic processes (R.Ramamoorthy et.al. Oxygen sensors, J. Mat. Sci. 38, 2003, 4271) and optical processes (Y.Xu et al., Sensors and Actuators B 65, 2000). Between the sensors based on optical processes luminescent gas sensors (LGS) are prospective.

The luminescent gas sensors with oxygen gas sensors (OGS) there between are based on property inherent to some types of materials, when the luminescence intensity of the material is dependent on concentration of surrounding active gas, which is reducing this intensity. Advantage of the LGS among the others is its high gas sensitivity caused by high sensitivity of luminescence method.

International patent application WO2012/110967 discloses a method of measuring of oxygen content in gas, wherein a ZrO₂ material is used as OGS. The method consists in measuring photoluminescence of a calibrated sensor, containing nanocrystalline zirconium dioxide, contacted with tested gas. The sensor is heated to a specific temperature and a beam of electromagnetic radiation is directed on it, then photoluminescence caused by that radiation is measured, whereupon the measurement result is compared with the sensor's calibration data.

CA 1243351 A1 provides an oxygen sensing package that includes a solid electrolyte sensor and a silicon carbide heating element arranged so as to surround the solid electrolyte and radiate heat to it from convex surfaces.

US 20050074970 discloses a hydrogen gas sensor, which employs an epitaxial layer of the thermodynamically stable form of aluminium nitride (AlN) as the "insulator" in an MIS structure having a thin metal gate electrode suitable for catalytic dissociate of hydrogen, such as palladium, on a semiconductor substrate.

US 7254986 describes a multi-gas sensor device for the detection of dissolved hydrocarbon gases in oil-filled electrical equipment. The device comprising a semiconductor substrate, one or more catalytic metal gate-electrodes deposited on the surface of the semiconductor substrate operable for sensing various gases, and an ohmic contact deposited on the surface of the semiconductor substrate. The semiconductor substrate comprises one of GaN, SiC, AlN, lnN, AlGaN, InGaN and AlInGaN.

US 7543565 discloses an optical system for detecting the concentration of combustion products operating in situ and at high temperature based on measurement of the optical absorption of a gaseous mixture of combustion products through a photodetecting sensor based on gallium nitride (GaN), aluminium nitride (AlN), indium nitride (InN) and corresponding alloys.

The aim of the invention was to develop a cost effective oxygen gas sensor.

### Summary of the invention

The aim of the invention was reached by developing an oxygen gas sensor comprising a housing, which encompasses an active media. Active media is in the form of Aluminium Nitride (AlN) nanopowder pellet. Sensor further comprises an inlet and an outlet providing flow of an oxygen gas to be measured. The sensor comprises a window of the housing allowing a light to pass into the housing, a light source located outside the housing for generating an exciting light and a luminescence recorder located outside the housing and configured to receive a luminescent light from AlN pellet when it is excited by the light source.

The light source is configured to generate a light with an emission wavelength of 300 to 330 nm. The light source can also comprise a light filter configured to selectively transmit light with the wavelength in the range of 300 to 330 nm. The light source can be configured to generate a light with a spectral region of 263 to 266 nm or light filter can be configured to selectively transmit light with the wavelength in the range of 263 to 266 nm

The AlN pellet consists of AlN nanopowder with a grain size in the range from 40 to 80 nm, preferably 60, nm and is configured to luminescent with a light of 420 nm when excited by the exciting light from the light source.

The luminescence recorder comprises a light filter configured to selectively transmit light with the wavelength of 420 nm. The luminescence recorder (10) is configured to sense a light at 420 nm.

Brief description of the drawings the following disclosure will be better understood by a person skilled in the art when read in conjunction with the figures.
Fig. 1 illustrates AlN nanopowder when looked up through high resolution transmission electron microscop (HRTEM);
Fig. 2 shows AlN nanopowder photoluminescence spectra at room temperature (RT) and different excitations: 1^{st} curve - 315 nm; 2^{nd} curve - 260 nm; 3^{rd} curve- 340 nm;
Fig. 3 shows AlN nanopowder luminescence excitation spectrum (1^{st} curve) for short light interval (15 nm) separated approximately at 400 nm and emission spectrum (2^{nd} curve) of a deep ultra violet light emission diode (UVLED) lamp. Such lamps are known under the following commercial products: UVCLEAN 315-3; QPHOTONICS. Arrows show the wavelengths used for luminescence excitation depicted in Fig. 2;
Fig. 4 illustrates photoluminescence spectra on AlN nanopowder at 315 nm excitation and RT measured for different conditions, when sample is in vacuum (1^{st} curve), in synthetic air (2^{nd} curve) and in oxygen gas (3^{rd} curve). Vacuum level reaches 3x10⁻⁵ mbar. A ratio of luminescence intensities measured when sample is in vacuum and oxygen gas is 4,79 but for the case of vacuum - synthetic air it is 3,24;
Fig. 5 illustrates AlN nanopowder dependence of integral luminescence intensity of vacuum pumping time measured under continuous sample excitation with 315 nm light with except of a short time interval enduring from 115 min to 245 min, when exciting light was ceased;
Fig. 6 shows AlN nanopowder integral intensities of luminescence spectra measured within the spectral range from 360 nm up to 550 nm under 315 nm excitation at RT, when sample is in vacuum at 2x10⁻² mbar (black squares) or in oxygen gas (black triangles). Environment of sample was changed from vacuum to oxygen gas and backwards repeatedly for 10 times as it is seen in said figure. A ratio of luminescence integral intensities characterizing the measurement pairs when sample is in vacuum and then in oxygen gas is depicted by the hollow circles;
Fig. 7 shows AlN nanopowder graduation curve demonstrating material sensitivity to oxygen gas. The points (excepting the first one) depict ratio of integral luminescence intensity measured in vacuum and when material is surrounded with oxygen and nitrogen gas mixture;
Fig. 8 shows a principal scheme of oxygen gas sensor comprising AlN nanopowder pellet 7.

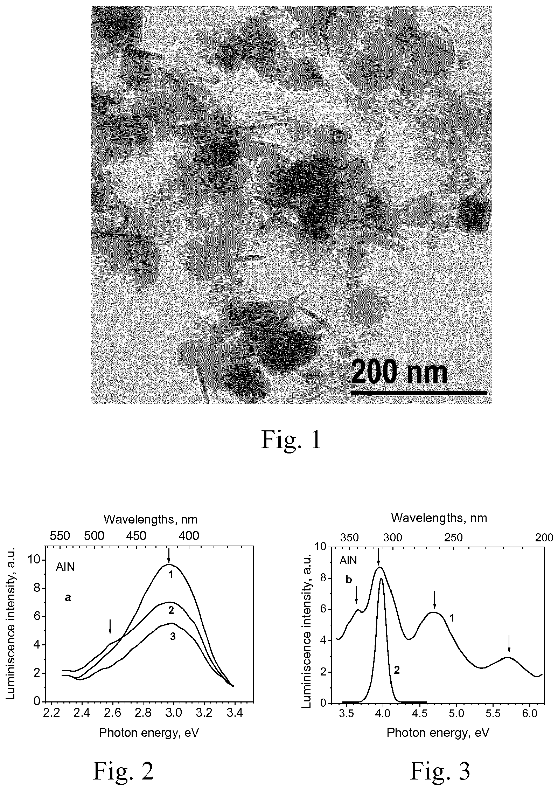

As a luminescent the AlN nanopowder was used, which is obtained by plasma synthesis method described by J.Grabis et al. (J.Grabis, I. Steins, A.Patmalnieks, B.Berzina and L.Trinklere. "Preparation and processing of doped AlN nanopowders", Estonian Journal of Engineering, 15 (2009) 266-274. doi: 10.3176/eng.2009.4.03.). Its average grain size is evaluated to be 60 nm as it is seen from the microscopy measurements depicted on the Fig. 1. Grain size can vary in the range of 40 to 80 nm. For measurements to test the properties of AlN nanopowder pellets, they were pressed with thickness of 1 - 1.5 mm and diameter of 13 mm.

To implement said AlN in oxygen gas sensing device its material spectral and oxygen gas sensing properties were analyzed. Long time investigations of luminescent properties for different size AlN reveal that the main native defects, which are always present in this material, are the oxygen-related defects (R. A. Youngman, J. H. Harris, "Luminescence studies of oxygen-related defects in aluminum nitride," J. Am. Ceram. Soc. 73 (1990) 3238-3246. doi:10.1111/j.1151-2916.1990.tb06444.x.; B.Berzina, L.Trinkler, D.Jakimovica, V.Korsaks, J.Grabis, I.Steins, E.Palcevskis, S.Bellucci, L.-C.Chen, S.Chattopadhyay and K.Chen, "Spectral characterization of bulk and nanostructured aluminum nitride", Journal of Nanophotonics, 3 (1) (2009)]. These defects are responsible for wide band luminescence around 400 nm, which can be excited with ultraviolet (UV) light of 250- 270 nm. Besides the 400 nm luminescence there is also 480 nm luminescence with its own excitation at 280 nm. It was found that decrease of material grain size results in increase of the 480 nm luminescence intensity in comparison with that of the 400 nm luminescence, allowing assumption, that the luminescence at 480 nm could be originated also by the type of oxygen-related defects, which are located close or at the surface of the material.

The present invention showed that in AlN nanopowder there is also another luminescence at 420 nm observed under UV excitation, which is well observable when material is in vacuum, while in surrounding air intensity of this luminescence decreases.

Luminescence spectra of AlN material together with their excitation spectrum are shown in Figs. 2 and 3, respectively, allowing also revealing of 420 nm luminescence mechanisms. The luminescence spectra are complex consisting of two sub-bands at 420 nm and 480 nm (see arrows on picture a), besides, the first of them is extremely predominant. Excitation spectrum of 420 nm luminescence consists of four main bands (Fig. 3; see the arrows), where excitation at 218 nm can be related to exciton processes, the 265 nm band - to recombination luminescence (RL) of donor-acceptor pairs (DAP), but the 315 and 340 nm bands - to intra-center excitation of 420 nm luminescence (intra-center luminescence - ICL). From the spectral results above it follows, that the best condition for the 420 nm luminescence excitation is using 315 nm.

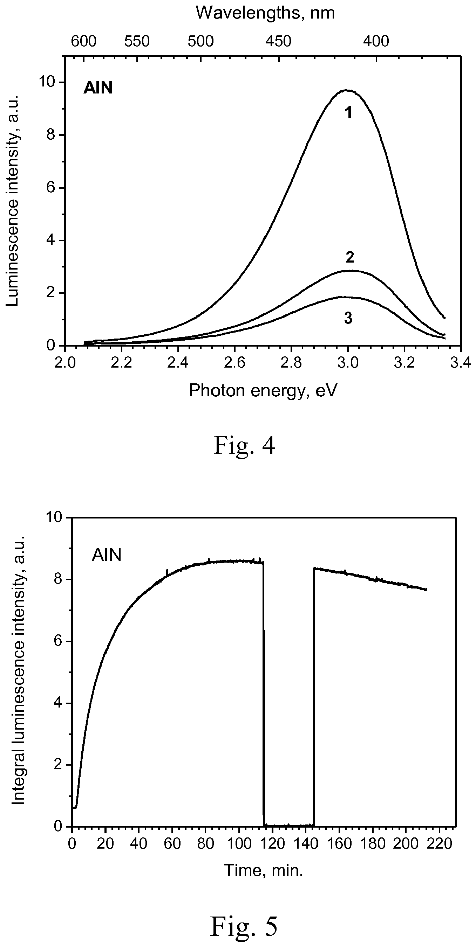

It was found that the 420 nm luminescence of AlN nanopowder possesses oxygen gas sensing properties demonstrated in Fig. 4. Three luminescence spectra using excitation at 315 nm are shown. The first of them is obtained, when sample is in vacuum (curve 1), the second one - when sample is in synthetic air (SA with 21% of oxygen, curve 2), but for the third one - in pure oxygen gas (99,5% of oxygen, curve 3). Comparison of intensities for these three luminescence bands markedly demonstrates the quenching effect caused by oxygen gas on luminescence at 420 nm, in the same time demonstrating oxygen gas sensing properties of AlN nanopowder based on luminescence at 420 nm. The most detailed luminescence studies allowed assumption, that the defects responsible for the 420 nm luminescence could be related to some types of F-centers (a nitrogen vacancy with one or more attached electrons), which are located not only on the material surface, but also within its volume. A part of the F-centers, which are located on or close to the material surface can interact with molecules of surrounding oxygen by means of physisorption processes, thus destroying the luminescence centers, which can be renewed, when oxygen is taken away and the material is surrounded with vacuum.

Dependence of integral luminescence intensity (ILI), which is proportional to the square under the luminescence curve from the luminescence spectrum, on vacuum pumping time measured under continuous sample irradiation with 315 nm light was studied (Fig. 5). It is seen that the ILI increases with time reaching its saturation after ∼70 minutes of vacuum pumping (a vacuum level reaches 3x10⁻² mbar). It is a duration necessary to prepare material for oxygen gas sensing. As it is seen from the Fig. 5, continuous irradiation of AlN material with luminescence exciting light and its short-term interruption do not have an effect on its sensing properties.

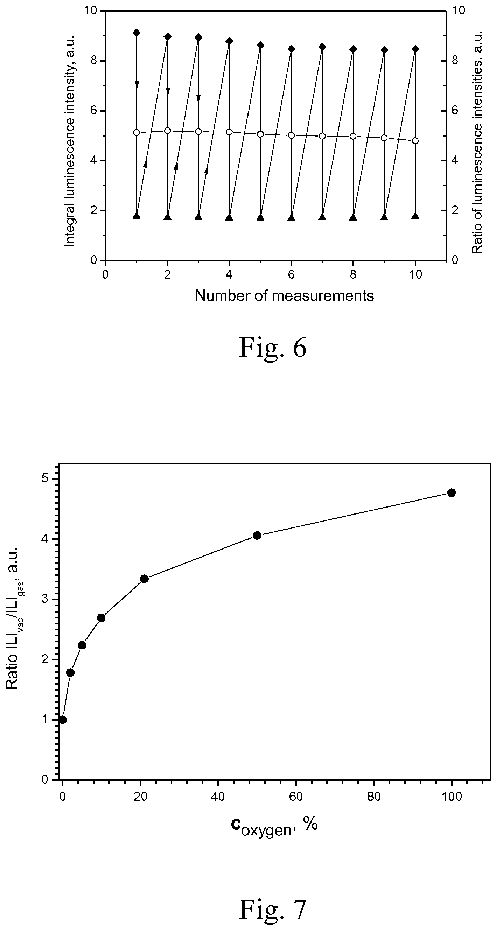

Repeatability and stability of material oxygen sensing properties were tested. The following series of measurements were done depicted on Fig. 6. At first the ILI was fixed when AlN sample is surrounded with vacuum (2x10⁻² mbar). Then the vacuum was exchanged on oxygen gas (99,5%) and the ILI measurement was done. Afterwards the vacuum was renewed and ILI measurement series when sample is in vacuum with following exchange on oxygen gas were continued for ten times. On Fig. 6 the black squares depicts the ILI measurements in vacuum, but the black triangles - measurements done when sample is surrounded with oxygen gas. The hollow circles are illustrating a ratio of the ILI characterizing the measurement pairs, when sample is in vacuum and then in oxygen gas. The results obtained are giving good evidence that the repeatability of the results and their stability are full well, and AlN nanopowder is appropriate material for oxygen gas sensing.

Material oxygen gas sensing properties using oxygen and nitrogen gas mixture of different proportions were tested. Dependence of the ILI on oxygen gas concentration in gas mixture consisting of nitrogen and oxygen as well as pure oxygen gas surrounding the AlN material was measured and depicted on Fig. 7. It is seen that increase of oxygen content in gas mixture surrounding the AlN material results in decrease of the 420 nm luminescence intensity. This graduation curve can be used for determination of oxygen concentration from gas mixture surrounding the given AlN sample. Every AlN nanopowder, which is foreseen to be used as oxygen gas sensing material, must have its own graduation graphics, similar to that shown in Fig. 7, characterizing directly the subsisting material.

The results above allow conclusion that AlN nanopowder is suitable material for optical oxygen gas sensors based on 420 nm luminescence. The following confirmations were found: the 420 nm luminescence observed for AlN nanopowder under optical excitation with UV light from spectral regions 250 - 270 nm or 300 - 330 nm is sensitive to oxygen gas concentration from gas mixture surrounding the sample. The 420 nm luminescence reaches the highest intensity, when AlN material is in vacuum. A presence of oxygen gas reduces intensity of the 420 nm luminescence; oxygen gas sensing measurements have a good repeatability; and individual graduation graphic demonstrating material sensitivity to surrounding oxygen gas concentration is necessary for anyone AlN nanopowder.

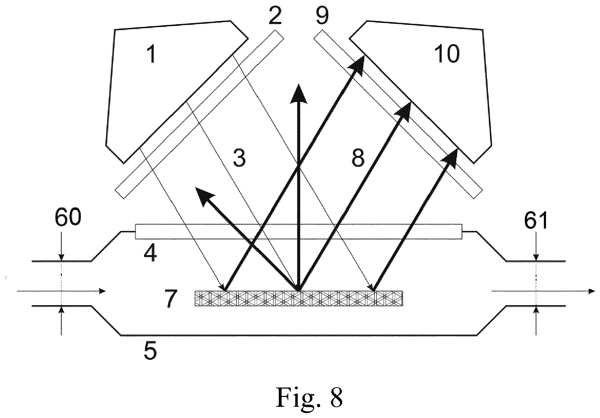

A scheme (cross-section) of AlN nanomaterial use for control of oxygen gas concentration in gas mixtures is depicted in Fig. 8. An active media - a pellet pressed from AlN nanopowder 7 is put inside of the housing **5.** The space around the pellet can be connected either with vacuum pump or container of gas mixture, which can be closed on one's own by means of shutters, representing inlet **60** and outlet **61.** The luminescence excitation of AlN pellet is realized using a light source **1,** when exciting light **3** is passing through a light filter **2** (if necessary) and further though a quartz window **4** being a component of the housing **5.** The luminescent light **8** from the active media **7** propagates homogeneously in the space and is collected through another light filter **9** on recording system **10.**

As it was shown above the 420 nm luminescence of AlN nanopowder have to be excited with light from two spectral regions of UV light at 250 - 270 nm or 300 - 330 nm, whereas the last one is preferable. Therefore, as exciting light source can be used the LED emitting 315 nm light (UVCLEAN 315-3, QPHOTONICS). Its emission is shown in Fig. 3, curve 2, and it fits very well with 315 nm excitation band seen on the same figure as curve 1. For this case a use of light filter **2** from Fig. 8 is not necessary. Alternative light sources include the hydrogen lamp and other facilities emitting the UV light. The solid state laser emitting 266 or 263 nm light is also available for the 420 nm luminescence excitation. Different systems for recording the luminescent light at 420 nm (blue light) can be used. As an example the photomultipliers (Hamamatsu Photonics) are available.

## Claims

1. Oxygen gas sensor comprising:
a housing (5) which encompasses an active media in the form of an Aluminium Nitride AlN nanopowder pellet (7) and has an inlet (60) and an outlet (61) providing flow of an oxygen gas to be measured;
a window (4) of the housing (5) allowing a light to pass into the housing (5);
a light source (1) located outside the housing (5) for generating an exciting light (3);
a luminescence recorder (10) located outside the housing (5) and configured to receive a luminescent light (8) from the AlN pellet (7) when it is excited by the light source (1),
wherein the light source (1) is configured to generate a light with an emission wavelength of 263 to 266 nm or of 300 to 330 nm, and
wherein the AlN pellet (7) consists of AlN nanopowder with a grain size in the range from 40 to 80 nm, preferably 60, nm and is configured to emit luminescent light with a wavelength of of 420 nm when excited by the exciting light (3) from the light source (1).

2. Oxygen gas sensor according to Claim 1, wherein the light source (1) comprises a light filter (2) configured to selectively transmit light with the wavelength in the range of 300 to 330 nm.

3. Oxygen gas sensor according to Claim 1 or 2, wherein the luminescence recorder (10) comprises a light filter (9) configured to selectively transmit light with the wavelength of 420 nm.

4. Oxygen gas sensor according to any Claim, wherein the luminescence recorder (10) is configured to sense a light at 420 nm.

## Patentansprüche

1. Sauerstoffgassensor bestehend aus:
einem Gehäuse (5), das ein aktives Medium in Form eines Aluminiumnitrid-AlN-Nanopulver-Pellets (7) umfasst und einen Einlass (60) sowie einen Auslass (61) aufweist, der den Durchfluss eines zu messenden Sauerstoffgases gewährleistet;
ein Fenster (4) des Gehäuses (5), das ein Licht in das Gehäuse (5) eintreten lässt;
eine Lichtquelle (1), die sich außerhalb des Gehäuses (5) befindet, und ein Anregungslicht (3) erzeugt;
einen Lumineszenzempfänger (10), der sich außerhalb des Gehäuses (5) befindet und so eingerichtet ist, dass er ein Lumineszenzlicht (8) von dem AlN-Pellet (7) empfängt, wenn es von der Lichtquelle (1) angeregt wird,
wobei die Lichtquelle (1) so ausgelegt ist, dass sie ein Licht mit einer Emissionswellenlänge von 263 bis 266 nm oder 300 bis 330 nm erzeugt, und
wobei das AlN-Pellet (7) aus AlN-Nanopulver mit einer Korngröße im Bereich von 40 bis 80 nm, vorzugsweise 60 nm, besteht und so beschaffen ist, dass es Lumineszenzlicht mit einer Wellenlänge von 420 nm emittiert, wenn es durch das Anregungslicht (3) der Lichtquelle (1) angeregt wird.

2. Sauerstoffgassensor nach Anspruch 1, wobei die Lichtquelle (1) einen Lichtfilter (2) umfasst, der so konfiguriert ist, dass er selektiv Licht mit der Wellenlänge im Bereich von 300 bis 330 nm durchlässt.

3. Sauerstoffgassensor nach Anspruch 1 oder 2, wobei der Lumineszenzempfänger (10) einen Lichtfilter (9) aufweist, der so konfiguriert ist, dass er selektiv Licht mit der Wellenlänge von 420 nm durchlässt.

4. Sauerstoffgassensor nach beliebigem Anspruch, wobei der Lumineszenzempfänger (10) so konfiguriert ist, dass er ein Licht bei 420 nm erfasst.

## Revendications

1. Capteur de gaz oxygène comprenant:
un boîtier (5) qui entoure un support actif sous la forme d'une pastille de nanopoudre de nitrure d'aluminium AlN (7) et possède une entrée (60) et une sortie (61) fournissant un flux d'oxygène gazeux à mesurer;
une fenêtre (4) du boîtier (5) permettant à la lumière de passer dans le boîtier (5);
une source de lumière (1) située à l'extérieur du boîtier (5) pour générer une lumière pulsante (3);
un enregistreur de luminescence (10) situé à l'extérieur du boîtier (5) et configuré pour recevoir une lumière luminescente (8) provenant de la pastille AlN (7) lorsqu'elle est émise par la source de lumière (1), dans lequel la source de lumière (1) est configurée pour générer une lumière avec une longueur d'onde d'émission de 263 à 266 nm ou de 300 à 330 nm, et dans lequel la pastille AlN (7) est constituée de nanopoudre AlN avec une granulométrie comprise entre 40 et à 80 nm, de préférence à 60 nm et est configuré pour émettre une lumière luminescente avec une longueur d'onde de 420 nm lorsqu'elle est émise par la lumière pulsante (3) provenant de la source de lumière (1).

2. Capteur de gaz oxygène selon la caractéristique déclarée 1, dans lequel la source de lumière (1) comprend un filtre de lumière (2) configuré pour transmettre sélectivement la lumière avec la longueur d'onde dans les limites de 300 à 330 nm.

3. Capteur de gaz oxygène selon la caractéristique déclarée 1 ou 2, dans lequel l'enregistreur de luminescence (10) comprend un filtre de lumière (9) configuré pour transmettre sélectivement la lumière avec la longueur d'onde de 420 nm.

4. Capteur de gaz oxygène selon l'une quelconque des caractéristiques déclarées précédentes, dans lequel l'enregistreur de luminescence (10) est configuré pour détecter une lumière à 420 nm.
